# EUROPÄISCHE PATENTSCHRIFT

(11) **EP 1 856 193 B1**
(45) Veröffentlichungstag und Bekanntmachung des Hinweises auf die Patenterteilung: **25.11.2009**
(21) Anmeldenummer: 06706817.1
(22) Anmeldetag: 10.02.2006
(51) Int. Cl.: C08J 3/09, C09D 175/12, C08K 5/1535, D06M 15/564, C14C 11/00, C08G 18/10, C08G 18/44

(54) **POLYURETHANHARNSTOFF-LÖSUNGEN**
POLYURETHANE UREA SOLUTIONS
SOLUTIONS DE POLYURETHANE-UREE

(30) Priorität: 23.02.2005 DE 102005008182
(43) Veröffentlichungstag der Anmeldung: 21.11.2007
(73) Patentinhaber: Bayer MaterialScience AG, 51368 Leverkusen (DE)
(72) Erfinder: KÖCHER, Jürgen, 40764 Langenfeld (DE); KUREK, Gerald, 04155 Leipzig (DE); CASSELMANN, Holger, 51519 Odenthal (DE); URBAN, Jürgen, 51061 Köln (DE); FELLER, Thomas, 42659 Solingen (DE)
(86) Internationale Anmeldenummer: PCT/EP2006/001187
(87) Internationale Veröffentlichungsnummer: WO 2006/089648

(56) Entgegenhaltungen:
- DE-A1- 2 457 387
- DE-A1- 3 134 112
- US-A- 3 573 247
- US-A- 5 178 788
- US-A- 5 563 193
- US-A- 5 688 855

## Beschreibung

Die Erfindung betrifft Lösungen von Polyurethanharnstoffen in γ-Butyrolacton im Gemish mit Alkoholen, gegebenenfalls unter Verwendung von Estern und Ketonen, sowie die Verwendung dieser Lösungen von Polyurethanharnstoffen zur Beschichtung von Substraten.

Bei den beschichteten Substraten handelt es sich vorzugsweise um Textilprodukte oder Leder, aber auch Werkstoffe wie Holz oder Beton können beschichtet werden.

Die Beschichtung von Substraten, beispielsweise textilen Flächengebilden, mit Polyurethansystemen gehört zum Stand der Technik. Man unterscheidet hierbei wässrige Polyurethandispersionen und lösungsmittelhaltige Systeme.

Die wässrigen Polyurethansysteme decken ein großes Anwendungsgebiet ab und haben den Vorteil, im wesentlichen auf flüchtige organische Substanzen verzichten zu können. Aufgrund ihres notwendigerweise hydrophilen Charakters besitzen entsprechende Beschichtungen allerdings eine geringere Wasserbeständigkeit als die entsprechenden, aus organischen Lösungen hergestellten Polyurethanbeschichtungen, da die hydrophilierenden Gruppen in dem Beschichtungsfilm verbleiben.

Will man Beschichtungen mit guter Wasserbeständigkeit erzeugen, so sind Polyurethansysteme aus organischen Lösungsmitteln den wässrigen Systemen vorzuziehen. Bei Einkomponenten-Polyurethanen ist der Filmbildungsprozess ein physikalischer Vorgang, der im Gegensatz zu den Zweikomponenten-Polyurethanen von keiner chemischen Reaktion begleitet ist.

Einkomponenten-Polyurethanharnstoff-Beschichtungen auf Basis organischer Lösungsmittel sind bei Anwendern aufgrund ihrer Härte, Elastizität und Beständigkeit sehr geschätzt und werden beispielsweise für die Herstellung von Deckstrichen auf Textilien eingesetzt. Solche Systeme werden hergestellt, indem man ein aliphatisches oder aromatisches Diisocyanat mit einem linearen Makrodiol (Polyether-, Polyester- oder Polycarbonatdiol) zu einem Prepolymer umsetzt und danach durch Umsetzung mit einem aliphatischen Diamin als Kettenverlängerer auf das erforderliche Molgewicht einstellt. Solche linearen Polyurethanharnstofflösungen, die besonders beständige Beschichtungen ergeben, neigen aufgrund ihrer Struktur, bestehend aus dem Harnstoff-Hartsegment und dem Makrodiol-Weichsegment, zu Assoziationen und Kristallisationen aus organischer Lösung. Eine gute Verarbeitbarkeit und gute Eigenschaften der Polyurethanbeschichtung sind dadurch nicht mehr gewährleistet.

Zur Verhinderung dieser Kristallisation werden im Stand der Technik Lösungsmittelgemische empfohlen, die in der Zwischenzeit aufgrund der gewachsenen toxikologischen Erkenntnisse zu den bedenklichen Lösungsmitteln gezählt werden. Für aliphatische Polyurethanharnstoffe empfehlen DE-A 3 134 112 und DE-A 2 457 387 Lösungsmittelmischungen aus aromatischen Kohlenwasserstoffen und Alkoholen, beispielsweise Mischungen von Toluol und Isopropanol.

Toluol ist aufgrund neuerer toxikologischer Erkenntnisse ein Gefahrstoff, der in Lösungsmittelgemischen für Polyurethanharnstoffe zur Textilbeschichtung nicht länger verwendet werden sollte. Die bisher ebenfalls in der Textilbeschichtung üblichen Amid- und Harnstoff-haltigen Lösungsmittel wie Dimethylformamid, Dimethylacetamid, N-Methylpyrrolidon oder Tetramethylharnstoff sind ebenfalls gesundheitsgefährdende Lösungsmittel und können aus diesen Gründen trotz ihres bekannt guten Lösevermögens ebenfalls nicht eingesetzt werden.

Die Verwendung von kristallisationsstörenden Zusätzen, beispielsweise Mischungen verschiedener Amine zur Kettenverlängerung, hat auch nicht den gewünschten Effekt. Außerdem wird durch diese gezielt herbeigeführte Uneinheitlichkeit das Polymer so weit in seiner Zusammensetzung gestört, dass die gewünschten Eigenschaften des Produktes, der Beschichtung, verloren gehen. Der Einsatz eines geeigneten Lösungsmittelsystems ist diesem Lösungsansatz vorzuziehen.

Um einkomponentige Polyurethanharnstofflösungen mit dem bekannt guten Eigenschaftsniveau weiter nutzen zu können, bedarf es daher neuer, toxikologisch unbedenklicher Lösungsmittelsysteme. Jedoch können viele toxikologisch unbedenkliche Lösungsmittelgemische, wie in den Vergleichsbeispielen dargelegt wird, nicht dazu benutzt werden, um kristallisationsstabile Polyurethanharnstofflösungen herzustellen.

Der vorliegenden Erfindung lag daher die Aufgabe zugrunde, neue Beschichtungslösungen zur Beschichtung von Substraten zu finden, mit denen es möglich ist, Beschichtungen auf Basis von Polyurethanharnstoffen zu erzeugen, die in ihren Eigenschaften dem Stand der Technik auf diesem Gebiet zumindest ebenbürtig sind, bei deren Herstellung und Anwendung jedoch auf toxikologisch bedenkliche Lösungsmittel verzichtet werden. Diese Formulierungen bzw. Lösungen müssen stabil sein, was insbesondere bedeutet, dass die gelösten Polymere nicht ausfallen bzw. auskristallisieren dürfen, die Lösungen also eine hohe Lagerbeständigkeit aufweisen.

Diese Aufgabe wurde mit Hilfe von Lösungen von linearen bzw. wenig verzweigten Polyurethanharnstoffen gelöst. Das geeignete erfindungsgemäße Lösungsmittel ist γ-Butyrolacton in Abmischung mit den vorstehend genannten toxikologisch unbedenklichen Lösungsmitteln.

Eine erfindungsgemäße Lösung von Polyurethanharnstoff in dem Gemisch organischer Lösungsmittel enthält 20-40 Gew.-% Feststoff, und diese Lösungen enthalten einen Anteil von γ-Butyrolacton von 15-50 Gew.-%, bezogen auf die gesamte Lösung, neben Alkoholen und ggf. Estern und Ketonen.

Als Polyurethanharnstoff können an sich alle Polyurethanharnstoffe verwendet werden, die zur Beschichtung bekanntermaßen geeignet sind, insbesondere solche, deren Verwendbarkeit zur Beschickung von Textil dem Fachmann bekannt ist oder prima facie geeignet erscheint.

Bevorzugt werden erfindungsgemäß Polyurethanharnstoffe eingesetzt, die aufgebaut werden aus
a) einem Makrodiol (Polyether-, Polyester- oder Polycarbonatdiol) mit einem Molgewicht zwischen 600 und 4000, besonders bevorzugt zwischen 1000 und 3000 oder aus Mischungen der genannten Makrodiolkomponenten oder aus Mischungen einer der genannten Makrodiole mit einem kurzkettigen aliphatischen Diol mit einem Molgewicht zwischen 50 und 500, wobei pro Mol Makrodiol 0,2 - 0,5 Mol des kurzkettigen aliphatischen Diols zugegeben wird,
b) pro Mol Makrodiol 0,5-2,0 Mol eines aliphatischen oder cycloaliphatischen Diamins oder Hydrazin als so genannter Kettenverlängerer, und
c) pro Mol Makrodiol 1,5-3,0 Mol eines aliphatischen, cycloaliphatischen oder aromatischen Diisocyanates, vorzugsweise eines aliphatischen oder cycloaliphatischen Diisocyanates.

Die in den erfindungsgemäßen Beschichtungsmittel für textile Gewebe enthaltenen Polyurethanharnstoffe sind hochmolekulare, aber praktisch unvernetzte, thermoplastische Polyurethanharnstof fe, die in Lösung oder Schmelze hergestellt werden. Sie sind u. a. dadurch charakterisiert, dass sie ohne Mitverwendung von Dimethylformamid, Dimethylacetamid, N-Methylpyrrolidon, Tetramethylharnstoff, Toluol oder anderen toxischen hochpolaren Lösungsmitteln hergestellt und angewendet werden können. Diese erfindungsgemäßen Polyurethanharnstoffe lassen sich in den erfindungsgemäß verwendeten Lösungsmittelgemischen auf Basis von γ-Butyrolacton und von Alkoholen und ggf. Estern und Ketonen herstellen, auflösen und verwenden.

Überraschend ist auch, dass sich die erfindungsgemäßen Beschichtungsmittel trotz des relativ hochsiedenden Lösungsmittels γ-Butyrolacton durch hervorragende Eigenschaften wie Haftung und Härte des getrockneten Films auszeichnen.

Als Aufbaukomponenten der Polyurethane, die den erfindungsgemäßen Beschichtungsmitteln zugrunde liegen, eignen sich eine große Anzahl von prinzipiell bekannten Polyurethanrohstoffen.

Grundsätzlich geeignet sind Makrodiole (a), d. h. Polyhydroxyverbindungen mit einer mittleren Hydroxylfunktionalität von etwa 1,8 bis 2,2, vorzugsweise von 1,95 bis 2,05. Ein höherer Verzweigungsgrad der Makrodiole ist zu vermeiden, da die entstehenden Polyurethanlösungen durch die hohe Vernetzung eine sehr hohe Viskosität erhalten, was für die Verarbeitung als Beschichtungslösung nachteilig ist. Die hohe Vernetzung verhindert außerdem, dass die entstehenden Polyurethanlösungen über mehrere Monate stabil sind, so wie es der Markt erfordert. In Frage kommen insbesondere Polyether, Polyester und Polycarbonate, bevorzugt Polyester und Polycarbonate.

Die in Frage kommenden, Hydroxylgruppen aufweisenden Polyether sind solche, die durch Polymerisation von cyclischen Ethern wie Ethylenoxid, Propylenoxid, Butylenoxid, Tetrahydrofuran, Styroloxid oder Epichlorhydrin mit sich selbst, z. B. in Gegenwart von BF₃, oder durch Anlagerung dieser Ringverbindungen, gegebenenfalls im Gemisch oder nacheinander, an Startkomponenten mit reaktionsfähigen Wasserstoffatomen wie Alkoholen und Aminen, z. B. Wasser, Ethylenglykol, Propylenglykol-1,2 oder Propylenglykol-1,3, hergestellt werden.

Die in Frage kommenden, Hydroxylgruppen aufweisenden Polyester sind z. B. Umsetzungsprodukte von mehrwertigen, vorzugsweise zweiwertigen Alkoholen mit mehrwertigen, vorzugsweise zweiwertigen Carbonsäuren. Anstelle der freien Carbonsäuren können auch die entsprechenden Polycarbonsäureanhydride oder entsprechende Polycarbonsäureester von niedrigen Alkoholen oder deren Gemische zur Herstellung der Polyester verwendet werden.

Die Polycarbonsäuren können aliphatischer, cycloaliphatischer, aromatischer und/oder heterocyclischer Natur sein und gegebenenfalls, z.B. durch Halogenatome, substituiert sein und/oder ungesättigt sein. Als Beispiele hierfür seien genannt:
Bernsteinsäure, Adipinsäure, Sebacinsäure, Phthalsäure, Isophtalsäure, Trimellitsäure, Phthalsäureanhydrid, Tetrahydrophthalsäureanhydrid, Hexahydrophthalsäureanhydrid, Tetrachlorphthalsäureanhydrid, Glutarsäureanhydrid, Maleinsäure, Maleinsäureanhydrid, Fumarsäure oder Terephthalsäuredimethylester.

Als mehrwertige Alkohole kommen z. B. Ethylenglykol, Propylenglykol-1,2, Propylenglykol-1,3, Butylenglykol-1,4, Butylenglykol-2,3, Hexandiol-1,6, Octandiol-1,8, Neopentylglykol oder 2-Methyl-1,3-propandiol in Frage. Auch Polyester aus Lactonen, z. B. ε-Caprolacton, sind einsatzbar.

Als Hydroxylgruppen aufweisende Polycarbonate kommen solche in Betracht, die z. B. durch Umsetzung von Diolen wie Propandiol-1,3, Butandiol-1,4, Hexandiol-1,6 oder Di-, Tri- oder Tetraethylenglykol mit Diaryl- oder Dialkylcarbonaten oder mit Phosgen hergestellt werden können. Bevorzugt sind solche Polycarbonate auf Basis von Hexandiol-1,6, sowie modifizierend wirkenden Co-Diolen wie z. B. Butandiol-1,4 oder auch ε-Caprolacton.

Bevorzugt eingesetzte Makrodiole sind Polyester und Polycarbonate, ganz besonders bevorzugte Makrodiole der erfindungsgemäßen Textilbeschichtung sind Polycarbonate.

Als kurzkettige aliphatische Diole kommen beispielsweise in Frage: Ethylenglykol, Propylenglykol, Neopentylglykol, Diethylenglykol, Triethylenglykol, Diethanolamin, 2-Ethyl-1,3-hexandiol, N-Methyldiisopropanolamin, Propandiol-1,3, Propandiol-1,4, Butandiol-1,3, Butandiol-1,4 oder Hexandiol-1,6. Pro Mol Makrodiol werden 0,2 - 0,5 Mol des kurzkettigen aliphatischen Diols zugesetzt.

Zur Herstellung der erfindungsgemäßen Polyurethan-Beschichtungen werden weiterhin sogenannte Kettenverlängerer (b) eingesetzt. Solche Kettenverlängerer sind Hydrazin oder aliphatische Diamine, z.B. Ethylendiamin, Propylendiamin, Hexamethylendiamin-1,6 oder andere aliphatische Diamine. Weiterhin kommen auch cycloaliphatische Diamine wie 1,4-Bis(aminomethyl)-cyclohexan, 4,4'-Diamino-3,3'-dimethyldicyclohexylmethan und andere (C₁-C₄)-Di- und Tetraalkyldicyclo-hexylmethane, z.B. 4,4'-Diamino-3,5-diethyl-3',5'-diisopropyldicyclohexylmethan in Frage. Bevorzugt werden 1-Amino-3,3,5-trimethyl-5-aminomethylcyclohexan (Isophorondiamin) und 4,4'-Diaminodicyclohexylmethan.

Es werden pro Mol Makrodiolgemisch (a) etwa 0,5-2,0 Mol an Kettenverlängerern (b) eingesetzt, vorzugsweise 0,6 -1,7 Mol.

Üblicherweise verwendet man etwa äquivalente Mengen an Kettenverlängerern, bezogen auf verbleibendes Isocyanat, unter Abzug des mit dem Makrodiolgemisch umgesetzten Isocyanatanteils. Vorzugsweise wird jedoch weniger als die äquivalente Menge, bis herab zu etwa 30-80 % der NCO-Gruppen, eingesetzt. Die verbleibenden NCO-Gruppen können mit monofunktionellen Abrechern wie Butylamin, Stearylamin, Trialkoxylsilylpropanamin, Butanonoxim oder Morpholin umgesetzt werden. Dies verhindert ein zu großes Anwachsen des Molekulargewichtes beziehungsweise von Vernetzungs- und Verzweigungsreaktionen. Auch die im Lösungsmittelgemisch enthaltenden Alkohole können in dieser Form als Kettenverlängerer fungieren.

Als Diisocyanate (c) kommen alle dem Fachmann bekannten aliphatischen, cycloaliphatischen und/oder aromatische Isocyanate einer mittleren NCO-Funktionalität ≥ 1, bevorzugt ≥ 2 einzeln oder in beliebigen Mischungen untereinander eingesetzt werden, wobei es unerheblich ist, ob diese nach Phosgen- öder phosgen-freien Verfahren hergestellt wurden.

Bevorzugt werden Isocyanate aus der Reihe der aliphatischen oder cycloaliphatischen Vertreter eingesetzt, wobei diese ein Kohlenstoffgrundgerüst (ohne die enthaltenen NCO-Gruppen) von 3 bis 30, bevorzugt 4 bis 20 Kohlenstoffatomen aufweisen.

Besonders bevorzugte Verbindungen der Komponente (c) entsprechen der vorstehend genannten Art mit aliphatisch und/oder cycloaliphatisch gebundene NCO-Gruppen wie beispielsweise Bis-(isocyanatoalkyl)ether, Bis- und Tris-(isocyanatoalkyl)-benzole, -toluole, sowie -xylole, Propandiisocyanate, Butandiisocyanate, Pentandiisocyanate, Hexandiisocyanate (z.B. Hexamethylendiisocyanat, HDI), Heptandiisocyanate, Octandiisocyanate, Nonandiisocyanate (z.B. Trimethyl-HDI (TMDI) in der Regel als Gemisch der 2,4,4- und 2,2,4-Isomeren), Nonantriisocyanate (z.B. 4-Isocyanatomethyt-1,8-octandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI) oder Bis-(isocyanatomethyl)norbornan (NBDI).

Ganz besonders bevorzugte Verbindungen der Komponente (c) sind Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(isocyanatocyclohexyl)methan (H₁₂NMI) oder Gemische dieser Isocyanate.

Es werden pro Mol Makrodiolgemisch (a) etwa 1,5 - 3,0 Mol an Diisocyanatkomponente (c) eingesetzt, vorzugsweise 1,7 - 2,8 Mol.

Zur Herstellung der Polyurethanharnstoff-Beschichtungen werden Makrodiol, gegebenenfalls ein niedermolekulares aliphatisches Diol, sowie Diisocyanat in der Schmelze oder in Lösung miteinander umgesetzt, bis alle Hydroxylgruppen verbraucht sind. Dann werden weitere Lösungsmittel zugesetzt und das gegebenenfalls gelöste Kettenverlängerungsdiamin zugesetzt. Nach Erreichen der Zielviskosität werden die noch verbleibenden Reste an NCO durch ein monofunktionelles aliphatisches Amin oder durch Butanonoxim blockiert.

Als Lösungsmittel für die Herstellung und die Anwendung der erfindungsgemäßen Polyurethanharnstoff-Beschichtungen kommen Mischungen aus Alkoholen mit γ-Butyrolacton in Betracht, wobei der Anteil des γ-Butyrolactons, bezogen auf das Gesamtgewicht der Polyurethanlösung, zwischen 15 Gew.-% und 50 Gew.-% liegt. Beispiele für die Alkohole, die gemeinsam mit dem γ-Butyrolacton verwendet werden, sind Ethanol, n-Propanol, iso-Propanol und 1-Methoxy-2-propanol. Darüber hinaus können auch noch Ester und Ketone wie beispielsweise Ethylacetat, Butylacetat, Aceton, Methylethylketon und Methylisobutylketon mitverwendet werden.

Die erfindungsgemäßen Polyurethanharnstoffe besitzen Schmelzpunkte oberhalb 100°C, vorzugsweise von 130°C bis 220°C. Sie besitzen eine hohe Haftung und Oberflächenhärte, hohe Reißdehnung und Reißfestigkeit.

Sie können in beliebigen, auf die jeweilige Anwendung bzw. die Art des zu beschichtenden Substrats eingestellten Konzentrationen angewendet werden, vorzugsweise verwendet man 15-60 Gew.-%ige Lösungen, besonders bevorzugt 20 bis 40 Gew.-%ige Lösungen.

Die erfindungsgemäßen Polyurethanharnstofflösungen werden bevorzugt zur Beschichtung von textilen Geweben und Leder verwendet. Der Auftrag kann direkt durch Drucken, Spritzen, Rakeln oder über eine Transferbeschichtung erfolgen. Von besonderer Bedeutung sind die erfindungsgemäßen Polyurethanharnstofflösungen zur Herstellung von Beschichtungsartikeln auf textilen Unterlagen nach dem Transferverfahren. Dabei werden die erfindungsgemäßen Polyurethanharnstofflösungen als Deckstriche eingesetzt, die auf dem Trägergewebe eine Auflage von 5 bis 60 g/m² erzeugen.

Übliche Zusatzstoffe und Hilfsmittel wie Griffhilfsmittel, Pigmente, Farbstoffe, Mattierungsmittel, UV-Stabilisatoren, phenolische Antioxidantien, Lichstabilisatoren, Hydrophobierungsmittel und/oder Verlaufshilfsmittel können mitverwendet werden.

Die mit den erfindungsgemäßen Polyurethanharnstofflösungen erhaltenen Zurichtungen haben trotz Verwendung des relativ hochsiedenden Lösungsmittels γ-Butyrolacton sehr hohe Echtheitseigenschaften. Besonders vorteilhaft sind die hohe Haftung, Härte und Reißfestigkeit.

Die Vorteile der erfindungsgemäßen Polyurethanharnstoff Lösungen werden durch Vergleichsversuche in den folgenden Beispielen dargelegt.

### Beispiele

Die dynamischen Viskositäten der Polyisocyanatlösungen wurden bei 23°C mit dem Viskosimeter VT 550, Platte-Kegel Messanordnung PK 100, der Fa. Haake (Karlsruhe, Deutschland) bestimmt. Durch Messungen bei unterschiedlichen Schergeschwindigkeiten wurde sichergestellt, dass das Fließverhalten der eingesetzten Polyisocyanatmischungen wie auch das der Vergleichsprodukte dem idealer Newtonscher Flüssigkeiten entspricht. Die Angabe der Schergeschwindigkeit kann deshalb entfallen.

Die Ermittlung des NCO-Gehaltes der in den Beispielen und Vergleichsbeispielen beschriebenen Harze erfolgte durch Titration gemäß DIN 53 185. Die in den Beispielen angegebenen NCO-Werte beziehen sich immer auf die Einwaage der betrachteten Synthesestufe des Reaktionsgemisches und nicht auf die Gesamtlösung.

Die in % angegebenen Mengenangaben verstehen sich, wenn nicht anders vermerkt, als Gew.-% und beziehen sich auf die erhaltene Gesamtlösung.

Die Hydrolysetests der aus den Polyurethanlösungen erhaltenen Filme wurden nach der DIN EN 12280-3 durchgeführt.

### Beispiel 1:

Dieses Beispiel beschreibt die Herstellung einer erfindungsgemäßen Polyurethanharnstoff Lösung.

200 g eines Polycarbonatdiols mit einem mittleren Molgewicht von 2000, hergestellt aus Dimethylcarbonat und Hexandiol-1,6, werden mit 63,3 g 1-Methoxypropylacetat und 52,3 g Isophorondiisocyanat vermischt und bei 110°C bis zu einem konstanten NCO-Gehalt von 3,60 % umgesetzt. Man lässt abkühlen und verdünnt mit 211,2 g γ-Butyrolacton und 188,9 g iso-Propanol. Bei Raumtemperatur werden eine Lösung von 23,9 g 4,4'-Diaminodicyclohexylmethan in 169,1 g 1-Methoxypropanol-2 zugegeben. Nach beendetem Aufbau des Molgewichtes und Erreichen des gewünschten Viskositätsbereiches werden zur Blockierung des verbleibenden Rest-NCO-Gehaltes 1 g n-Butylamin zugegeben. Man erhält 909 g einer 30%igen Polyurethanharnstofflösung in 1-Methoxypropylacetat/γ-Butyrolacton/iso-Propanol/1-Methoxypropanol-2 mit einer Viskosität von 21500 mPas bei 22°C.

Die erhaltene Lösung ist und vollkommen kristallisationsstabil und frei von Trübungen oder Ausfällungen. Man kann selbst nach 6 Monaten Lagerung bei Raumtemperatur keinerlei Trübung feststellen.

### Beispiel 2:

Dieses Beispiel beschreibt die Herstellung einer erfindungsgemäßen Polyurethanharnstoff-Lösung.

200 g eines Polycarbonatdiols mit einem mittleren Molgewicht von 2000, hergestellt aus Dimethylcarbonat und Hexandiol-1,6, werden mit 63,3 g 1-Methoxypropylacetat und 52,3 g Isophorondiisocyanat vermischt und bei 110°C bis zu einem konstanten NCO-Gehalt von 3,60 % umgesetzt. Man läst abkühlen und verdünnt mit 211,2 g γ-Butyrolacton und 188,9 g iso-Propanol. Bei Raumtemperatur werden eine Lösung von 21,2 g 4,4'-Diaminodicyclohexylmethan in 161,8 g 1-Methoxypropanol-2 zugegeben. Nach beendetem Aufbau des Molgewichtes und Erreichen des gewünschten Viskositätsbereiches werden zur Blockierung des verbleibenden Rest-NCO-Gehaltes 3,5 g (3-Aminopropyl)-triethoxysilan zugegeben. Man erhält 909 g einer 30%igen Polyurethanharnstofflösung in 1-Methoxypropylacetat/γ-Butyrolacton/iso-Propanol-Methoxypropanol-2 mit einer Viskosität von 34800 mPas bei 22°C.

Die erhaltene Lösung ist vollkommen kristallisationsstabil. Man kann selbst nach 6 Monaten Lagerung bei Raumtemperatur keinerlei Trübung feststellen.

### Beispiel 3: Vergleichsbeispiel (Toluolhaltige Lösung)

Dieses Beispiel beschreibt die Herstellung einer Polyurethanhamstoff-Lösung unter Verwendung von Toluol.

Hierzu verfährt man wie im Beispiel 2 beschrieben. Anstelle von γ-Butyrolacton verwendet man die gleiche Menge an Toluol, ansonsten bleiben alle Edukte und Reaktionsparameter so wie in Beispiel 2 beschrieben. Man erhält 909 g einer 30%igen Polyurethanharnstofflösung mit einer Viskosität von 30000 mPas, die bei Raumtemperatur 6 Monate stabil ist.

### Beispiel 4: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton werden gleiche Mengen an Methylethylketon verwendet.

Man erhält eine 30%ige Polyurethanharnstofflösung in 1-Methoxypropylacetat/Methylethylketon/iso-Propanol/1-Methoxypropanol-2 mit einer Viskosität von 30400 mPas bei 22°C.

Nach 2 Wochen Lagerung bei Raumtemperatur stellt man eine zunehmende Trübung der Lösung fest.

### Beispiel 5: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton werden gleiche Mengen an 1-Methoxypropylacetat verwendet
- Anstelle von 1 g n-Butylamin werden 4 g (3-Aminopropyl)-triethoxysilan zum Blockieren des Rest-NCO-Gehaltes eingesetzt.

Man erhält eine leicht trübe, 30%ige Polyurethanharnstofflösung in 1-Methoxypropylacetat/iso-Propanol/1-Methoxypropanol-2 mit einer Viskosität von 22000 mPas bei 22°C. Die Trübung der Lösung verstärkt sich nach wenigen Tagen.

### Beispiel 6: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton werden eine Mischung aus 111,2 g 1-Methoxypropylacetat und 100 g Propylencarbonat verwendet
- Anstelle von 1 g n-Butylamin werden 3,5 g (3-Aminopropyl)-triethoxysilan zum Blockieren des Rest-NCO-Gehaltes eingesetzt.

Man erhält eine 30%ige Polyurethanharnstofflösung in 1-Methoxypropylacetat/Propylencarbonatliso-Propanol/1-Methoxypropanol-2 mit einer Viskosität von 33000 mPas. Nach 4 Tagen Lagerung bei Raumtemperatur wird die Lösung trübe.

### Beispiel 7: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton werden eine Mischung aus 111,2 g 1-Methoxypropylacetat und 100 g Butylacetat verwendet

Aufgrund der fehlenden Löslichkeit des entstehenden Polymers geliert der Ansatz nach Zugabe von 80% der Gesamtmenge an 4,4'-Diaminodicyclohexylmethan in 1-Methoxypropanol-2.

### Beispiel 8: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton wird die gleiche Menge Butylacetat verwendet.
- Anstelle von 1 g n-Butylamin werden 7 g (3-Aminopropyl)-triethoxysilan zum Blockieren des Rest-NCO-Gehaltes eingesetzt.

Man erhält eine 30%ige Polyurethanharnstofflösung in 1-Methoxypropylacetat/Butylacetat/iso-Propanol/1-Methoxypropanol-2 mit einer Viskosität von 36000 mPas bei 22°C. Nach 8 Tagen Lagerung bei Raumtemperatur stellt man eine deutliche Trübung der Lösung fest.

### Beispiel 9: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton wird die gleich Menge Butylacetat verwendet.

Man erhält eine 30 %ige Polyurethanharnstofflösung in 1-Methoxypropylacetat/Butylacetat/iso-Propanol/1-Methoacypropanol-2 mit einer Viskosität von 39200 mPas bei 22°C. Nach 4 Tagen Lagerung bei Raumtemperatur stellt man eine starke Trübung der Lösung fest.

### Beispiel 10: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton wird eine Mischung aus 161,2 g Butylacetat und 50 g Propylencarbonat eingesetzt.
- Anstelle von 1 g n-Butylamin werden 3,5 g (3-Aminopropyl)-triethoxysilan zum Blockieren des Rest-NCO-Gehaltes eingesetzt.

Man erhält eine 30 %ige Polyurethanharnstofflösung in 1-Methoxypropylacetat/Butylacetat/Propylencarbonat/iso-Propanol/1-Methoxy-propanol-2 mit einer Viskosität von 39200 mPas bei 22°C. Nach 6 Tagen Lagerung bei Raumtemperatur stellt man eine Trübung der Lösung fest.

### Beispiel 11: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von 1-Methoxypropylacetat werden gleiche Mengen Butylacetat verwendet, und anstelle von γ-Butyrolacton werden gleiche Mengen an Butylacetat verwendet.
- Anstelle von 1 g n-Butylamin werden 3,5 g (3-Aminopropyl)-triethoxysilan zum Blockieren des Rest-NCO-Gehaltes eingesetzt.

Man erhält eine 30 %ige Polyurethanharnstofflösung in Butylacetat/iso-Propanol/1-Methoxypropanol-2 mit einer Viskosität von 27500 mPas bei 22°C. Nach 3 Tagen Lagerung bei Raumtemperatur stellt man eine deutliche Trübung der Lösung fest.

### Beispiel 12:

Dieses Beispiel beschreibt die Herstellung einer erfindungsgemäßen Polyurethanharnstoff Lösung.

400 g eines Polycarbonatdiols mit einem mittleren Molgewicht von 2000, hergestellt aus Dimethylcarbonat und Hexandiol-1,6, werden mit 82,2 g Isophorondiisocyanat vermischt und bei 110°C bis zu einem konstanten NCO-Wert von 2,9 % umgesetzt. Der Ansatz wird danach mit 357,8 g γ-Butyrolacton und 238,4 g iso-Propanol verdünnt.

Bei Raumtemperatur werden eine Lösung von 22,6 g Isophorondiamin in 190 g 1-Methoxypropanol-2 zugegeben. Nach beendeter Reaktion werden zur Blockierung des verbleibenden Rest-NCO-Gehaltes 2 g n-Butylamin zugegeben.

Man erhält 1293 g einer 38%igen Polyurethanharnstofflösung in γ-Butyrolacton/iso-Propanol/1-Methoxypropanol-2 mit einer Viskosität von 37000 mPas bei 22°C.

Die erhaltene Lösung ist vollkommen kristallisationsstabil. Man kann nach 6 Monaten Lagerung bei Raumtemperatur keinerlei Trübung feststellen.

### Beispiel 13:

Dieses Beispiel beschreibt die Herstellung einer erfmdungsgemäßen Polyurethanharnstoff Lösung.

400 g eines Polycarbonatdiols mit einem mittleren Molgewicht von 2000, hergestellt aus Dimethylcarbonat und Hexandiol-1,6, werden mit 82,2 g Isophorondiisocyanat vermischt und bei 110°C bis zu einem konstanten NCO-Wert von 2,9 % umgesetzt. Der Ansatz wird danach mit 357,8 g γ-Butyrolacton und 238,4 g iso-Propanol verdünnt.

Bei Raumtemperatur werden eine Lösung von 22,8 g Isophorondiamin in 214,3 g 1-Methoxypropanal-2 zugegeben. Nach beendeter Reaktion werden zur Blockierung des verbleibenden Rest-NCO-Gehaltes 7 g (3-Aminopropyl)-triethoxysilan zugegeben.

Man erhält 1322,5 g einer 38%igen Polyurethanharnstofflösung in γ-Butyrolacton/iso-Propanol/1-Methoxypropanol-2 mit einer Viskosität von 50400 mPas bei 22°C.

Die erhaltene Lösung ist vollkommen kristallisationsstabil. Man kann nach 6 Monaten Lagerung bei Raumtemperatur keinerlei Trübung feststellen.

### Beispiel 14: Vergleichsbeispiel (Toluolhaltige Lösung)

Dieses Beispiel beschreibt die Herstellung einer Polyurethanharnstoff Lösung unter Verwendung von Toluol.

Hierzu verfährt man wie im Beispiel 13 beschrieben. Anstelle von γ-Butyrolacton verwendet man gleiche Mengen an Toluol, ansonsten bleiben alle Edukte und Reaktionsparameter so wie in Beispiel 13 beschrieben. Man erhält 1322,5 g einer 38%igen Polyurethanharnstofflösung mit einer Viskosität von 48000 mPas, die bei Raumtemperatur 6 Monate stabil ist.

### Beispiel 15: Vergleichsbeispiel ohne Verwendung von Toluol oder γ-Butyrolacton

Dieses Beispiel ist ein Vergleichsbeispiel zum erfindungsgemäßen Beispiel 1.

Die Herstellung dieser Polyurethanharnstofflösung erfolgt wie im Beispiel 1 beschrieben, wobei folgende Änderungen zum Beispiel 1 vorgenommen wurden:
- Anstelle von γ-Butyrolacton werden gleiche Mengen an Butylacetat verwendet.
- Anstelle von 2 g n-Butylamin werden 6,5 g (3-Aminopropyl)-triethoxysilan zum Blockieren des Rest-NCO-Gehaltes eingesetzt.

Man erhält eine 38 %ige Polyurethanharnstofflösung in Butylacetat/iso-Propanol/1-Methoxypropanol-2 mit einer Viskosität von 32500 mPas bei 22°C. Nach bereits einem Tag Lagerung bei Raumtemperatur stellt man eine deutliche Trübung der Lösung fest.

### Beispiel 16:

Dieses Beispiel beschreibt die Herstellung einer erfindungsgemäßen Polyurethanharnstoff-Lösung.

183,8 g eines Polycarbonatdiols mit einem mittleren Molgewicht von 2000, hergestellt aus Dimethylcarbonat und Hexandiol-1,6, werden mit 50,6 g 1-Methoxypropyl-2-acetat, 3,9 g N-Methyldiisopropanolamin und 57,3 g Isophorondiisocyanat vermischt und bei 110°C bis zu einem konstanten NCO-Gehalt von 3,9 % umgesetzt. Man lässt auf 50°C abkühlen und verdünnt mit 255,2 g γ-Butyrolacton und 333,5 g tert.-Butanol. Bei Raumtemperatur werden eine Lösung von 24,7 g 4,4'-Diaminodicyclohexylmethan in 73,6 g tert.-Butanol, 59,2 g 1-Methoxypropyl-2-acetat und 46,6 g γ-Butyrolacton gelöst zugegeben. Nach beendetem Aufbau des Molgewichtes und Erreichen des gewünschten Viskositätsbereiches werden zur Blockierung des verbleibenden Rest-NCO-Gehaltes 6 g Butanonoxim zugegeben. Man erhält 1094,4 g einer 25,2%igen Polyurethanharnstofflösung in γ-Butyrolacton/tert.-Butanol/1-Methoxypropyl-2-acetat mit einer Viskosität von 16000 mPas bei 22°C.

Die erhaltene Lösung ist frei von Trübungen und über 6 Monate kristallisationsstabil.

### Beispiel 17:

Dieses Beispiel beschreibt die Herstellung einer erfindungsgemäßen Polyurethanharnstoff-Lösung.

183,8 g eines Polycarbonatdiols mit einem mittleren Molgewicht von 2000, hergestellt aus Dimethylcarbonat und Hexandiol-1,6, werden mit 50,6 g Butylacetat, 3,9 g N-Methyldiisopropanolamin und 57,3 g Isophorondiisocyanat vermischt und bei 110°C bis zu einem konstanten NCO-Gehalt von 3,9 % umgesetzt. Man lässt auf 90°C abkühlen und verdünnt mit 255,2 g γ-Butyrolacton und 333,5 g tert.-Butanol. Bei Raumtemperatur werden eine Lösung von 25,7 g 4,4'-Diaminodicyclohexylmethan in 71,3 g tert.-Butanol und 102,5 g 1-Methoxypropyl-2-acetat gelöst zugegeben. Nach beendetem Aufbau des Molgewichtes und Erreichen des gewünschten Viskositätsbereiches werden zur Blockierung des verbleibenden Rest-NCO-Gehaltes 6 g Butanonoxim zugegeben. Man erhält 1089,7 g einer 25,4%igen Polyurethanharnstofflösung in γ-Butyrolacton/Butylacetat / tert.-Butanol / 1-Methoxypropyl-2-acetat mit einer Viskosität von 17200 mPas bei 22 °C.

Die erhaltene Lösung ist frei von Trübungen und über 6 Monate kristallisationsstabil.

### Beispiel 18:

Dieses Beispiel beschreibt die Herstellung einer erfindungsgemäßen Polyurethanharnstoff Lösung.

183,8 g eines Polycarbonatdiols mit einem mittleren Molgewicht von 2000, hergestellt aus Dimethylcarbonat und Hexandiol-1,6, werden mit 50,6 g Gamma-Butyrolacton, 3,9 g N-Methyldiisopropanolamin und 57,3 g Isophorondiisocyanat vermischt und bei 110°C bis zu einem konstanten NCO-Gehalt von 3,9 % umgesetzt. Man lässt auf 90°C abkühlen und verdünnt mit 255,2 g γ-Butyrolacton und 333,5 g tert.-Butanol. Bei Raumtemperatur werden eine Lösung von 25,6 g 4,4'-Diaminodicyclohexylmethan in 74,6 g tert.-Butanol und 107,3 g 1-Methoxypropyl-2-acetat gelöst zugegeben. Nach beendetem Aufbau des Molgewichtes und Erreichen des gewünschten Viskositätsbereiches werden zur Blockierung des verbleibenden Rest-NCO-Gehaltes 5 g Butanonoxim zugegeben. Man erhält 1096,8 g einer 25,1%igen Polyurethanharnstofflösung in γ-Butyrolacton/ tert.-Butanol / 1-Methoxypropyl-2-acetat mit einer Viskosität von 12800 mPas bei 22°C.

Die erhaltene Lösung ist frei von Trübungen und über 6 Monate kristallisationsstabil.

### Beispiel 19:

Dieses Beispiel beschreibt die Herstellung eines erfindungsgemäßen Polyurethanharnstoffes in Lösung.

183,8 g eines Polycarbonatdiols mit einem mittleren Molgewicht von 2000, hergestellt aus Dimethylcarbonat und Hexandiol-1,6, werden mit 50,6 g Butylacetat, 3,9 g N-Methyldiisopropanolamin' und 57,3 g Isophorondiisocyanat vermischt und bei 110°C bis zu einem konstanten NCO-Gehalt von 3,9 umgesetzt. Man lässt auf 90°C abkühlen und verdünnt mit 255,2 g Gamma-Butyrolacton und 333,5 g tert.-Butanol. Bei Raumtemperatur werden eine Lösung von 26,6 g 4,4'-Diaminodicyclohexylmethan in 72,1 g tert.-Butanol und 103,6 g 1-Methoxypropyl-2-acetat gelöst zugegeben. Nach beendetem Aufbau des Molgewichtes und Erreichen des gewünschten Viskositätsbereiches werden zur Blockierung des verbleibenden Rest-NCO-Gehaltes 2,0 g 1-Butylamin zugegeben. Man erhält 1090,6 g einer 25,1%igen Polyurethanharnstofflösung in Gamma-Butyrolacton/Butylacetat/tert.-Butanol/1-Methoxypropyl-2-acetat mit einer Viskosität von 11000 mPas bei 22°C.

Die erhaltene Lösung ist frei von Trübungen und über 6 Monate kristallisationsstabil.

### Beispiel 20: Vergleichsbeispiel (toluolhaltige Lösung)

Dieses Beispiel beschreibt die Herstellung einer Polyurethanharnstoff-Lösung unter Verwendung von Toluol, aber ohne die Verwendung von γ-Butyrolacton, als Vergleichsbeispiel zu den erfindungsgemäßen Beispielen 16, 17, 18 und 19.

Hierzu verfährt man wie im Beispiel 17 beschrieben. Anstelle von Butylacetat und γ-Butyrolacton verwendet man gleiche Mengen an Toluol, ansonsten bleiben alle Edukte und Reaktionsparameter so wie in Beispiel 17 beschrieben.

Man erhält 1089,7 g einer 25,4%igen Polyurethanharnstofflösung in Toluol/tert.-Butanol/1-Methoxypropyl-2-acetat mit einer Viskosität von 14000 mPas bei 22 °C.

### Beispiel 21: Vergleichsbeispiel ohne Verwendung von Toluol oder γ-Butyrolacton

Dieses Beispiel ist ein Vergleichsbeispiel zu den erfindungsgemäßen Beispielen 16-19.

183,8 g eines Polycarbonatdiols mit einem mittleren Molgewicht von 2000, hergestellt aus Dimethylcarbonat und Hexandiol-1,6, werden mit 50,6 g Butylacetat, 3,9 g N-Methyldiisopropanolamin und 57,3 g Isophorondiisocyanat vermischt und bei 110°C bis zu einem konstanten NCO-Gehalt von 3,9 % umgesetzt. Man lässt auf 90°C abkühlen und verdünnt mit 255,2 g Butylacetat und 333,5 g tert.-Butanol. Bei Raumtemperatur werden eine Lösung von 24,6 g 4,4'-Diaminodicyclohexyl-methan in 74,1 g tert.-Butanol und 106,5 g 1-Methoxypropyl-2-acetat gelöst zugegeben. Im Laufe der Zugabe der Kettenverlängerungslösungen beobachtet man eine Vergelung des Ansatzes. Nach beendetem Aufbau des Molgewichtes und Erreichen des gewünschten Viskositätsbereiches werden zur Blockierung des verbleibenden Rest-NCO-Gehaltes 7 g Butanonoxim zugegeben. Man erhält 1096,4 g einer 25,2%igen Polyurethanharnstofflösung in Butylacetat/tert.-Butanol/1-Methoxypropyl-2-acetat mit einer Viskosität von 24 000 mPas bei 22°C.

Die erhaltene Lösung enthält Gelteilchen und ist dadurch bereits leicht getrübt. Nach einer Woche Lagern bei Raumtemperatur ist eine deutliche Zunahme der Trübung der Lösung zu erkennen.

### Beispiel 22: Verwendungsbeispiel

Zum Vergleich der Beschichtungseigenschaften wurde aus den Polyurethanlösungen gemäß Beispiel 1, Beispiel 2 und Vergleichsbeispiel 3 (Produkt gemäß dem Stand der Technik mit Toluol als Lösungsmittel) Beschichtungsfilme in einer Schichtdicke von 0,15 mm angefertigt und geprüft.

| | **Bespiel 1** | **Beispiel 2** | **Vergleichsbeispiel 3** **(toluolhaltig)** |
|---|---|---|---|
| Modul 100 % | 6,2 MPa | 6,1 MPa | 6,2 MPa |
| Zugfestigkeit | 51,3 MPa | 60,2 MPa | 44,0 MPa |
| Bruchdehnung | 630 % | 730 % | 630 % |
| Zugfestigkeit nach | 47,0 MPa | 62,7 MPa | 58,3 MPa |
| 2 Wochen Hydrolyse | | | |
| Bruchdehnung nach 2 Wochen Hydrolyse | 560 % | 580 % | 550 % |
| Volumenquellung in | 212 % | 238 % | 266 % |
| Ethylacetat | | | |
| Schmelzpunkt | 190 °C | 212 °C | 195 °C |

Diese Ergebnisse zeigen, das erfindungsgemäße Polyurethanlösungen die Herstellung von Beschichtungen ermöglichen, die unter Verwendung von toxikologisch unbedenklichen organischen Lösemitteln hergestellt werden.

### Beispiel 23: Verwendungsbeispiel

Zum Vergleich der Beschichtungseigenschaften wurde aus den Polyurethanlösungen gemäß Beispiel 12 und dem Vergleichsbeispiel 3 (Produkt gemäß Stand der Technik mit Toluol als Lösungsmittel) Beschichtungsfilme in einer Schichtdicke von 0,15 mm angefertigt und geprüft.

| | **Beispiel 12** | **Vergleichsbeispiel 3** **(toluolhaltig)** |
|---|---|---|
| Modul 100 % | 2,8 MPa | 6,2 MPa |
| Zugfestigkeit | 40,0 MPa | 44,0 MPa |
| Bruchdehnung | 860 % | 630 % |
| Zugfestigkeit nach 2 Wochen Hydrolyse | 41,5 MPa | 58,3 MPa |
| Bruchdehnung nach 2 Wochen Hydrolyse | 780 % | 550 % |
| Volumenquellung Wasser | 0 % | 0 % |
| Schmelzpunkt | 185 °C | 195 °C |

Diese Ergebnisse zeigen, dass diese Polyurethanlösungen die Herstellung von Beschichtungen unter Verwendung von toxikologisch unbedenklichen organischen Lösemitteln ermöglichen.

### Beispiel 24: Verwendungsbeispiel

Zum Vergleich der Beschichtungseigenschaften wurde aus den Polyurethanlösungen gemäß Beispiel 16, Beispiel 17 und Vergleichsbeispiel 18 (toluolhaltig) Beschichtungsfilme in einer Schichtdicke von 0,15 mm angefertigt und geprüft.

| | **Beispiel 16** | **Beispiel 17** | **Vergleichsbeispiel 18** **(toluolhaltig)** |
|---|---|---|---|
| Modul 100 % | 8,2 MPa | 7,9 MPa | 10,5 MPa |
| Zugfestigkeit | 57,6 MPa | 63,2 MPa | 45,0 MPa |
| Bruchdehnung | 600 % | 700 % | 400 % |
| Zugfestigkeit nach 2 Wochen Hydrolyse | 60,2 MPa | 60,6 MPa | 43,0 MPa |
| Bruchdehnung nach 2 Wochen Hydrolyse | 540 % | 590 % | 380 % |
| Volumenquellung in Ethylacetat | 152 % | 163 % | 180 % |
| Schmelzpunkt | 210 °C | 208 °C | 185°C |

Diese Ergebnisse zeigen, das erfindungsgemäße Polyurethanlösungen die Herstellung von Beschichtungen ermöglichen, die unter Verwendung von toxikologisch unbedenklichen organischen Lösemitteln hergestellt werden.

Zudem wurden einige technisch relevante Eigenschaften der erhaltenen Beschichtungen deutlich verbessert.

## Patentansprüche

1. Lösungen von Potyurethanharnstoffen in γ-Butyrolacton-haltigen Lösungsmitteln, **dadurch gekennzeichnet, dass** sie 20 bis 40 Gew.-% gelösten Polyurethanharnstoff sowie 15 bis 50 Gew.-% γ-Butyrolacton im Gemisch mit Alkoholen, gegebenenfalls unter Verwendung von Estern und Ketonen enthalten.

2. Lösungen gemäß Ansprüchen 1, **dadurch gekennzeichnet dass** sie 20 bis 40 Gew.-% gelösten Polyurethanharnstoff sowie 15 bis 50 Gew.-% γ-Butyrolacton im Gemisch mit niedermolekularen Alkoholen ausgewählt aus der Gruppe bestehend aus Ethanol, n-Propanol, iso-Propanol und 1-Methoxypropanol, gegebenenfalls unter Verwendung von Estern und Ketonen ausgewählt aus der Gruppe bestehend aus Butylacetat, Aceton, Methylethylketon und Methylisobutylketon enthalten.

3. Lösungen gemäß Ansprüchen 1 oder 2, **dadurch gekennzeichnet dass** der enthaltende Polyurethanharnstoff aufgebaut ist aus:
a) linearen Makrodiolen ausgewählt aus der Gruppe bestehend Polyether-, Polyester- oder Polycarbonatdiol mit einem Molgewicht zwischen 600 und 4000, wobei das Diol eine mittlere Funktionalität von 1,8 - 2,2 besitzt, oder aus Mischungen der genannten Makrodiolkomponenten oder aus Mischungen einer der genannten Makrodiole mit einem niedermolekularen aliphatischen Diol mit einer Molmasse von 50-500,
b) pro Mol Diol 0,5 - 2,0 Mol eines aliphatischen oder cycloaliphatischen Diamins oder Hydrazin als Kettenverlängerer, und
c) pro Mol Makrodiol 1,5 - 3,0 Mol eines aliphatischen, cycloaliphatischen oder aromatischen Diisocyanates.

4. Verwendung der Lösungen gemäß Ansprüchen 1-3 zur Beschichtung von Substraten.

5. Verwendung gemäß Anspruch 4, **dadurch gekennzeichnet, dass** die Lösungen durch Drucken, Spritzen, Rakeln oder durch Transferbeschichtung auf die Substrate aufgebracht werden.

6. Verwendung gemäß Ansprüchen 4 und 5, **dadurch gekennzeichnet, dass** es sich bei den 5 Substraten um Textilien handelt.

7. Verwendung gemäß Ansprüchen 4 und 5, **dadurch gekennzeichnet, dass** es sich bei den Substraten um Leder handelt.

## Claims

1. Solutions of polyurethane ureas in γ-butyrolactone-containing solvents, **characterised in that** they comprise from 20 to 40 wt.% dissolved polyurethane urea and from 15 to 50 wt.% γ-butyrolactone in admixture with alcohols, optionally with the use of esters and ketones.

2. Solutions according to claim 1, **characterised in that** they comprise from 20 to 40 wt.% dissolved polyurethane urea and from 15 to 50 wt.% γ-butyrolactone in admixture with low molecular weight alcohols selected from the group consisting of ethanol, n-propanol, isopropanol and 1-methoxypropanol, optionally with the use of esters and ketones selected from the group consisting of butyl acetate, acetone, methyl ethyl ketone and methyl isobutyl ketone.

3. Solutions according to claim 1 or 2, **characterised in that** the polyurethane urea that is present is composed of:
a) linear macrodiols selected from the group consisting of polyether, polyester or polycarbonate diol having a molar weight of from 600 to 4000, the diol having a mean functionality of from 1.8 to 2.2, or mixtures of the mentioned macrodiol components or mixtures of one of the mentioned macrodiols with a low molecular weight aliphatic diol having a molar mass of from 50 to 500,
b) per mol of diol, from 0.5 to 2.0 mol of an aliphatic or cycloaliphatic diamine or hydrazine as chain extender, and
c) per mol of macrodiol, from 1.5 to 3.0 mol of an aliphatic, cycloaliphatic or aromatic diisocyanate.

4. Use of the solutions according to claims 1 to 3 in the coating of substrates.

5. Use according to claim 4, **characterised in that** the solutions are applied to the substrates by printing, spraying, knife application or by transfer coating.

6. Use according to claims 4 and 5, **characterised in that** the substrates are textiles.

7. Use according to claims 4 and 5, **characterised in that** the substrates are leather.

## Revendications

1. Solutions de polyuréthane-urées dans des solvants contenant de la γ-butyrolactone,
**caractérisées en ce qu'**elles contiennent de 20 à 40 % en poids de polyuréthane-urées dissoutes ainsi que de 15 à 50 % en poids de γ-butyrolactone en mélange avec des alcools, éventuellement en utilisant des esters et des cétones.

2. Solutions selon la revendication 1, **caractérisées en ce qu'**elles contiennent de 20 à 40 % en poids de polyuréthane-urées dissoutes ainsi que de 15 à 50 % en poids de γ-butyrolactone en mélange avec des alcools de faibles poids moléculaires choisis dans le groupe constitué de l'éthanol, du n-propanol, de l'iso-propanol et du 1-méthoxypropanol, éventuellement en utilisant des esters et des cétones choisies dans le groupe constitué de l'acétate de butyle, de l'acétone, de la méthyléthylcétone et de la méthylisobutylcétone.

3. Solutions selon la revendication 1 ou 2, **caractérisées en ce que** la polyuréthane-urée contenue est construite à partir :
a) de macrodiols linéaires choisis dans le groupe constitué de polyéther-, de polyester- ou de polycarbonate-diols avec un poids moléculaire de 600 à 4 000, le diol possédant une fonctionnalité moyenne de 1,8-2,2, ou à partir de mélanges des constituants macrodiols cités ou à partir de mélanges d'un des macrodiols cités avec un diol aliphatique de faible poids moléculaire ayant une masse molaire de 50-500,
b) par mol de diol, de 0,5-2,0 mol d'une diamine aliphatique ou cycloaliphatique ou d'une hydrazine comme agent d'allongement de chaîne, et
c) par mol de macrodiol, de 1,5-3,0 mol d'un diisocyanate aliphatique, cycloaliphatique ou aromatique.

4. Utilisation des solutions selon les revendications 1-3 pour le revêtement de substrats.

5. Utilisation selon la revendication 4, **caractérisée en ce que** les solutions sont appliquées sur les substrats par impression, pulvérisation, racle ou par revêtement par transfert.

6. Utilisation selon les revendications 4 et 5, **caractérisée en ce qu'**il s'agit pour les substrats de textiles.

7. Utilisation selon les revendications 4 et 5, **caractérisée en ce qu'**il s'agit pour les substrats de cuir.
